# EUROPEAN PATENT APPLICATION

(11) **EP 4 503 578 A1**
(43) Date of publication of application: **05.02.2025**
(21) Application number: 23856562.6
(22) Date of filing: 21.08.2023
(51) Int. Cl.: H04L 67/10

(54) **COMMUNICATION METHOD AND APPARATUS, AND DEVICE AND STORAGE MEDIUM**

(30) Priority: 26.08.2022 CN 202211035703
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LI, Ting, Beijing 100032 (CN); ZHANG, Xiaohua, Beijing 100032 (CN); NI, Weichen, Beijing 100032 (CN); SUN, Qi, Beijing 100032 (CN); LI, Nan, Beijing 100032 (CN); LIU, Jianhua, Beijing 100032 (CN); CHI, Gangyi, Beijing 100032 (CN)
(74) Representative: Murgitroyd & Company
(86) International application number: PCT/CN2023/113956
(87) International publication number: WO 2024/041472

(57) **Abstract**

A communication method, a communication apparatus, a communication device and a storage medium are provided. The method includes: sending, by a network element, first information to a cloud platform; the first information is used to indicate computing resource configuration of a network function of the cloud platform, and the first information is determined based on at least measurement information of the cloud platform.

## Description

### CROSS-REFERENCE TO RELATED APPLICATION

The present application claims a priority to the Chinese patent application No. 202211035703.9 filed in China on August 26, 2022, a disclosure of which is incorporated herein by reference in its entirety.

### TECHNICAL FIELD

The present disclosure relates to the field of wireless communication, and in particular, to a communication method, a communication apparatus, a communication device and a storage medium.

### BACKGROUND

In related art, operating systems such as X86 and Advanced RISC Machines (ARM) have a frequency adjustment function of a Central Processing Unit (CPU). The system can configure the CPU to extend maximum frequency or minimum frequency, thereby adjusting the CPU frequency based on CPU utilization, CPU load and other states.

A cloud virtualization platform (Open Cloud, O-Cloud) is defined in Open Radio Access Network (O-RAN) architecture, which is used to deploy a wireless network function after using cloud or a virtualization technology on a general physical resource, including O-Cloud Infrastructure Management Services (IMS), O-Cloud Deployment Management Services (DMS), a Virtualised Network Function (VNF) and/or Container Network Functions (Cloud Native Network Functions, CNF). At the same time, the O-Cloud can interact with Service Management and Orchestration (SMO) through an O2 interface, allowing the SMO to manage resources such as O-Cloud infrastructure, the VNF and/or the CNF. The SMO deploys infrastructure and a cloud platform and manages resources through an O2ims interface, and the SMO deploys the VNF and/or the CNF and manages resources through an O2dms interface.

In the related art, when the VNF and/or the CNF are deployed based on the O-RAN architecture, it is impossible to flexibly configure and execute a power-saving policy based on resource occupancy of the O-Cloud.

### SUMMARY

In view of the above, a main object of the present disclosure is to provide a communication method, a communication apparatus, a communication device and a storage medium.

To achieve the above object, the technical solutions of the present disclosure are implemented as follows.

An embodiment of the present disclosure provides a communication method, which is applied to a network element, and the method includes:
sending first information to a cloud platform; the first information is used to indicate computing resource configuration of a network function of the cloud platform, and the first information is determined based on at least measurement information of the cloud platform.

In the above solution, the first information includes at least one of the followings:
second information, at least used to indicate a pinning related information between the network function of the cloud platform and a Central Processing Unit (CPU) core;
a number of virtual CPUs;
a CPU frequency state or a CPU frequency mode; or
a CPU power state.

In the above solution, the second information includes at least one of the followings:
whether the network function supports CPU core pinning;
at least one CPU core pinned to the network function;
a CPU core pinning rule; or
a correspondence between the virtual CPU and the CPU core.

In the above solution, the method further includes:
receiving the measurement information from the cloud platform;
determining the first information based on the measurement information;
wherein the measurement information includes at least one of the followings:
   third information, at least used to indicate a pinning related information between the network function of the cloud platform and a CPU core;
   a number of virtual CPUs;
   CPU frequency;
   CPU utilization;
   CPU temperature; or
   a CPU power state.

In the above solution, the third information includes at least one of the followings:
whether the network function supports CPU core pinning;
at least one CPU core pinned to the network function; or
a correspondence between the virtual CPU and the CPU core.

In the above solution, the network function includes at least one of the followings:
a Virtualised Network Function (VNF);
a Container Network Function (CNF);
a Near-Real-Time Radio Intelligent Controller (Near-RT RIC);
an Open Radio Access Network (O-RAN) Central Unit (O-CU);
an O-RAN Central Unit Control Plane (O-CU-CP);
an O-RAN Central Unit User Plane (O-CU-UP);
an O-RAN Distributed Unit (O-DU); or
an O-RAN Radio Unit (O-RU).

In the above solution, the determining the first information based on the measurement information includes at least one of the followings:
using a preset first model to identify the measurement information and determine the first information; or
determining the first information based on a preset first rule and the measurement information;
wherein the first rule includes at least one of the followings:
   a first trigger condition corresponding to each parameter value in the measurement information and a first operation corresponding to the first trigger condition; or
   a second trigger condition corresponding to each parameter value combination included in the measurement information and a second operation corresponding to the second trigger condition.

In the above solution, the first trigger condition includes: the parameter value belongs to a first threshold range;
the second trigger condition includes: each parameter value in the parameter value combination belongs to a second threshold range corresponding to the parameter value.

In the above solution, the first operation and the second operation include at least one of the followings:
adjusting a CPU frequency state or a CPU frequency mode;
adjusting a CPU power state;
adjusting a CPU core pinned to the network function;
adjusting a CPU core pinning rule; or
adjusting a correspondence between the virtual CPU and the CPU core.

In the above solution, the network element includes at least one of the followings: a Service Management and Orchestration (SMO), a Network Functions Virtualization Orchestrator (NFVO), a Mobile Edge Orchestrator (MEO), a Virtualised Network Function Manager (VNFM), or a Container Network Function Manager (CNFM).

The embodiment of the present disclosure provides a communication method, which is applied to a cloud platform, and the method includes:
receiving first information from a network element; the first information is used to indicate computing resource configuration of a network function of the cloud platform, and the first information is determined based on at least measurement information of the cloud platform.

In the above solution, the first information includes at least one of the followings:
second information, at least used to indicate a pinning related information between the network function of the cloud platform and a Central Processing Unit (CPU) core;
a number of virtual CPUs;
a CPU frequency state or a CPU frequency mode; or
a CPU power state.

In the above solution, the second information includes at least one of the followings:
whether the network function supports CPU core pinning;
at least one CPU core pinned to the network function;
a CPU core pinning rule; or
a correspondence between the virtual CPU and the CPU core.

In the above solution, the method further includes:
sending the measurement information to the network element;
wherein the measurement information includes at least one of the followings:
   third information, at least used to indicate a pinning related information between a virtual resource of the cloud platform and a CPU core;
   a number of virtual CPUs;
   CPU frequency;
   CPU utilization;
   CPU temperature; or
   a CPU power state.

In the above solution, the third information includes at least one of the followings:
whether the network function supports CPU core pinning;
at least one CPU core pinned to the network function; or
a correspondence between the virtual CPU and the CPU core.

In the above solution, the network function includes at least one of the followings:
a Virtualised Network Function (VNF);
a Container Network Function (CNF);
a Near-Real-Time Radio Intelligent Controller (Near-RT RIC);
an Open Radio Access Network (O-RAN) Central Unit (O-CU);
an O-RAN Central Unit Control Plane (O-CU-CP);
an O-RAN Central Unit User Plane (O-CU-UP);
an O-RAN Distributed Unit (O-DU); or
an O-RAN Radio Unit (O-RU).

In the above solution, the method further includes:
configuring the computing resource of the network function of the cloud platform based on the first information.

In the above solution, the configuring the computing resource of the network function of the cloud platform based on the first information includes at least one of the followings:
adjusting a CPU frequency state or a CPU frequency mode;
adjusting a CPU power state;
adjusting a CPU core pinned to the network function;
adjusting a CPU core pinning rule; or
adjusting a correspondence between the virtual CPU and the CPU core.

In the above solution, the network element includes at least one of the followings: a Service Management and Orchestration (SMO), a Network Functions Virtualization Orchestrator (NFVO), a Mobile Edge Orchestrator (MEO), a Virtualised Network Function Manager (VNFM), or a Container Network Function Manager (CNFM).

An embodiment of the present disclosure provides a communication apparatus, which is applied to a network element, and the apparatus includes: a first sending module, configured to send first information to a cloud platform; the first information is used to indicate computing resource configuration of a network function of the cloud platform, and the first information is determined based on at least measurement information of the cloud platform.

In the above solution, the first information includes at least one of the followings:
second information, at least used to indicate a pinning related information between the network function of the cloud platform and a Central Processing Unit (CPU) core;
a number of virtual CPUs;
a CPU frequency state or a CPU frequency mode; or
a CPU power state.

In the above solution, the second information includes at least one of the followings:
whether the network function supports CPU core pinning;
at least one CPU core pinned to the network function;
a CPU core pinning rule; or
a correspondence between the virtual CPU and the CPU core.

In the above solution, the apparatus further includes:
a first receiving module, configured to receive the measurement information from the cloud platform;
a first determination module, configured to determine the first information based on the measurement information;
the measurement information includes at least one of the followings:
third information, at least used to indicate a pinning related information between the network function of the cloud platform and a CPU core;
a number of virtual CPUs;
CPU frequency;
CPU utilization;
CPU temperature; or
a CPU power state.

In the above solution, the third information includes at least one of the followings:
whether the network function supports CPU core pinning;
at least one CPU core pinned to the network function; or
a correspondence between the virtual CPU and the CPU core.

In the above solution, the network function includes at least one of the followings:
VNF;
CNF;
Near-RT RIC;
CU;
CUCP;
CU UP;
DU; or
RU.

In the above solution, the first determination module is configured to perform at least one of the followings:
using a preset first model to identify the measurement information and determine the first information; or
determining the first information based on a preset first rule and the measurement information;
wherein the first rule includes at least one of the followings:
   a first trigger condition corresponding to each parameter value in the measurement information and a first operation corresponding to the first trigger condition; or
   a second trigger condition corresponding to each parameter value combination included in the measurement information and a second operation corresponding to the second trigger condition.

In the above solution, the first trigger condition includes: the parameter value belongs to a first threshold range;
the second trigger condition includes: each parameter value in the parameter value combination belongs to a second threshold range corresponding to the parameter value.

In the above solution, the first operation and the second operation include at least one of the followings:
adjusting a CPU frequency state or a CPU frequency mode;
adjusting a CPU power state;
adjusting a CPU core pinned to the network function;
adjusting a CPU core pinning rule; or
adjusting a correspondence between the virtual CPU and the CPU core.

In the above solution, the network element includes at least one of the followings: an SMO, an NFVO, an MEO, a VNFM, or a CNFM.

An embodiment of the present disclosure provides a communication apparatus, which is applied to a cloud platform, and the apparatus includes: a second receiving module, configured to receive first information from a network element; the first information is used to indicate computing resource configuration of a network function of the cloud platform, and the first information is determined based on at least measurement information of the cloud platform.

In the above solution, the first information includes at least one of the followings:
second information, at least used to indicate a pinning related information between the network function of the cloud platform and a Central Processing Unit (CPU) core;
a number of virtual CPUs;
a CPU frequency state or a CPU frequency mode; or
a CPU power state.

In the above solution, the second information includes at least one of the followings:
whether the network function supports CPU core pinning;
at least one CPU core pinned to the network function;
a CPU core pinning rule; or
a correspondence between the virtual CPU and the CPU core.

In the above solution, the apparatus further includes: a second sending module, configured to send measurement information to a network element;
the measurement information includes at least one of the followings:
third information, at least used to indicate a pinning related information between a virtual resource of the cloud platform and a CPU core;
a number of virtual CPUs;
CPU frequency;
CPU utilization;
CPU temperature; or
a CPU power state.

In the above solution, the third information includes at least one of the followings:
whether the network function supports CPU core pinning;
at least one CPU core pinned to the network function; or
a correspondence between the virtual CPU and the CPU core.

In the above solution, the network function includes at least one of the followings:
VNF;
CNF;
Near-RT RIC;
CU;
CUCP;
CU UP;
DU; or
RU.

In the above solution, the apparatus further includes: a configuration module configured for configuring the computing resource of the network function of the cloud platform based on the first information.

In the above solution, the configuration module is configured to perform at least one of the followings:
adjusting a CPU frequency state or a CPU frequency mode;
adjusting a CPU power state;
adjusting a CPU core pinned to the network function;
adjusting a CPU core pinning rule; or
adjusting a correspondence between the virtual CPU and the CPU core.

In the above solution, the network element includes at least one of the followings: an SMO, an NFVO, an MEO, a VNFM or a CNFM.

An embodiment of the present disclosure further provides a communication device, including a memory, a processor, and a computer program stored in the memory and used to be executed by the processor, wherein the processor, when executing the program, implements the steps of any method on a network element side; or, when executing the program, implements the steps of any method on a cloud platform side.

An embodiment of the present disclosure further provides a computer-readable storage medium storing a computer program, wherein the computer program, when executed by a processor, implements the steps of any method on the network element side; or, when executing the program, implements the steps of any method on the cloud platform side.

The embodiments of the present disclosure provide a communication method, a communication apparatus, a communication device, and a storage medium. The method includes: sending, by a network element, first information to a cloud platform; the first information is used to indicate computing resource configuration of a network function of the cloud platform, and the first information is determined based on at least measurement information of the cloud platform; the cloud platform receives the first information from the network element. Accordingly, the network element can determine the first information based on the measurement information of the cloud platform itself, and the cloud platform flexibly configures the computing resource of the network function based on the first information, thereby adjusting the computing resources for the network function level of the cloud platform to achieve more accurate power-saving configuration.

### BRIEF DESCRIPTION OF THE DRAWINGS

Fig. 1 is a schematic diagram of O-RAN architecture;
Fig. 2 is a flow chart of a communication method provided by an embodiment of the present disclosure;
Fig. 3 is another flow chart of a communication method provided by an embodiment of the present disclosure;
Fig. 4 is a flow chart of a communication method provided by an application embodiment of the present disclosure;
Fig. 5 is a flow chart of a method for generating a power-saving policy provided by an application embodiment of the present disclosure;
Fig. 6 is another flow chart of a method for generating a power-saving policy provided by an application embodiment of the present disclosure;
Fig. 7 is a flow chart of a method for generating a configuration policy of CPU frequency provided by an application embodiment of the present disclosure;
Fig. 8 is another flow chart of a method for generating a configuration policy of CPU frequency provided by an application embodiment of the present disclosure;
Fig. 9 is a flow chart of a method for generating a configuration policy of a CPU core provided by an application embodiment of the present disclosure;
Fig. 10 is a flow chart of a method for generating a configuration policy of a CPU power state provided by an application embodiment of the present disclosure;
Fig. 11 is a structural diagram of a communication apparatus provided by an embodiment of the present disclosure;
Fig. 12 is another structural diagram of a communication apparatus provided by an embodiment of the present disclosure;
Fig. 13 is a structural diagram of a communication device provided by an embodiment of the present disclosure.

### DETAILED DESCRIPTION

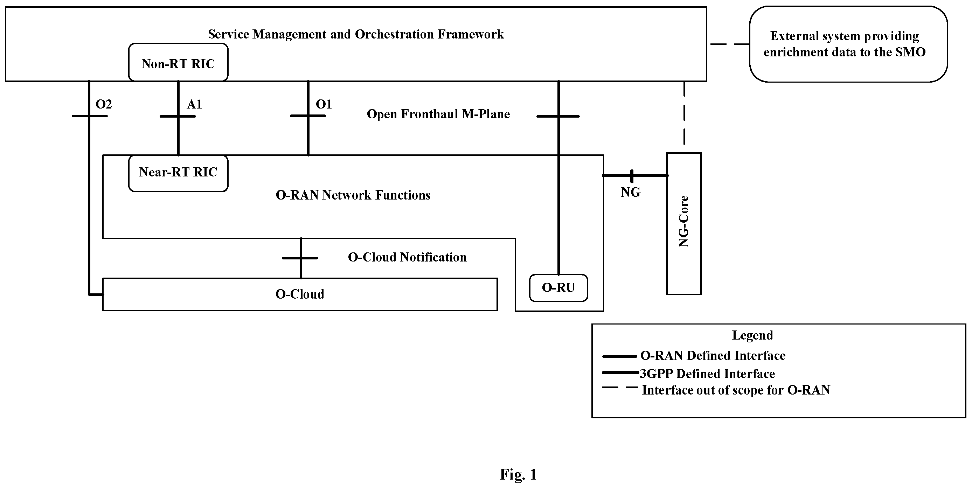

An O-RAN architecture in the related art is shown in Fig. 1, wherein the O-Cloud can interact with the SMO through an O2 interface.

When deploying a VNF and/or a CNF, the SMO configures a number of CPU cores in a configuration file sent to O-Cloud DMS through O2dms, thereby triggering the O-Cloud DMS to create and instantiate a resource required for the VNF and/or the CNF. However, in the related art, the configuration file sent by the SMO to the O-Cloud DMS through the O2dms only specifies a number of virtual CPUs (vCPUs). When the current workload of the deployed VNF and/or CNF is low, the O-Cloud needs to reduce the resource allocated to the current VNF and/or CNF accordingly, such as lowing CPU frequency, modifying a CPU power state, etc. However, it cannot adjust the resources such as CPU frequency and the CPU state of the O-Cloud, nor can it flexibly configure and/or perform a power-saving operation based on resource occupancy of the O-Cloud.

Based on this, an embodiment of the present disclosure provides a communication method, wherein a network element sends first information to a cloud platform; the first information is used to indicate computing resource configuration of a network function of the cloud platform, and the first information is determined based on at least measurement information of the cloud platform; the cloud platform receives first information from the network element. Thus, the cloud platform can flexibly configure the computing resource of the network function based on its own measurement information.

The present disclosure is further described in detail below in conjunction with the embodiments.

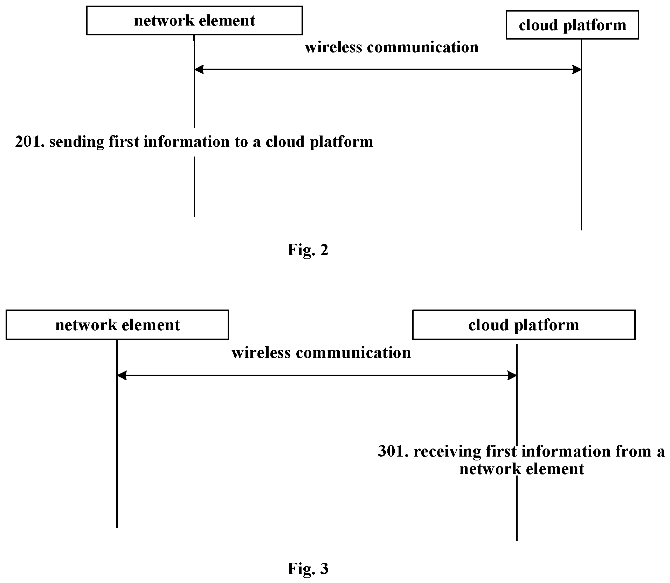

Fig. 2 is a flow chart of a communication method provided by an embodiment of the present disclosure. As shown in Fig. 2, the method can be applied to a network element, and the method includes the following steps.

Step 201: sending first information to a cloud platform; the first information is used to indicate computing resource configuration of a network function of the cloud platform, and the first information is determined based on at least measurement information of the cloud platform.

The network element includes but is not limited to at least one of the followings: a Service Management and Orchestration (SMO), a Network Functions Virtualization Orchestrator (NFVO), a Mobile Edge Orchestrator (MEO), a Virtualised Network Function Manager (VNFM), or a Container Network Function Manager (CNFM).

The network element may also be a network device or a network function, which can interact with the cloud platform, for example, it may be an SMO, or a functional unit in the SMO.

In some embodiments, the computing resource configuration includes at least CPU configuration.

In some embodiments, the first information includes but is not limited to at least one of the followings:
second information, at least used to indicate the pinning related information between the network function of the cloud platform and the CPU core;
second information, at least used to indicate a pinning related information between the network function of the cloud platform and a Central Processing Unit (CPU) core;
a number of virtual CPUs;
a CPU frequency state or a CPU frequency mode; or
a CPU power state.

In some embodiments, the second information includes but is not limited to at least one of the followings:
whether the network function supports CPU core pinning;
at least one CPU core pinned to the network function;
a CPU core pinning rule; or
a correspondence between the virtual CPU and the CPU core.

Specifically, the network element instructs the cloud platform to configure the computing resource of the network function through the first information, and the first information may include a relevant parameter required for an operation, such as at least one of the followings: second information, a number of virtual CPUs, a CPU frequency state or a CPU frequency mode, or a CPU power state. The cloud platform performs relevant resource configuration based on the parameter included in the received first information, thereby achieving power saving and other effects.

The cloud platform can be implemented by one or more CPUs.

The CPU is a physical CPU, and the physical CPU has one or more CPU cores (also called CPU kernels), that is, the CPU can be a single-core CPU, a multi-core CPU, etc., and the corresponding CPU can have a single CPU core or multiple CPU cores. One or more virtual CPUs can be implemented on the CPU.

In application, through a virtualization technology, based on a mapping relationship between the virtual CPU and the CPU core, the corresponding virtual CPU is allocated to the network function on the CPU core pinned to the network function.

The number of virtual CPUs can be the number of virtual CPUs allocated by the CPU for the network function. When the cloud platform implements multiple network functions, the number of virtual CPUs may include: the number of virtual CPUs allocated for each network function.

For a wireless network function in the cloud platform (e.g., O-Cloud), such as a Centralized Unit (CU), a Distributed Unit (DU), a Radio Access Network Intelligent Controller (RAN Intelligent Controller, RIC), etc., the corresponding software function is implemented through virtualization technology. A virtualized wireless network function can be deployed on a general server, which is referred to as a network function. The network function can be allocated with specific computing, storage, a network and other resources on a physical server, a combination of the network function and the allocated resources forms an instance. The network function includes at least one of the followings:
a Virtualised Network Function (VNF);
a Container Network Function (CNF);
a Near-Real-Time Radio Intelligent Controller (Near-RT RIC);
an Open Radio Access Network (O-RAN) Central Unit (O-CU);
an O-RAN Central Unit Control Plane (O-CU-CP);
an O-RAN Central Unit User Plane (O-CU-UP);
an O-RAN Distributed Unit (O-DU); or
an O-RAN Radio Unit (O-RU), etc.

The O-RAN refers to Open Radio Access Network.

The CPU frequency state or the CPU frequency mode may include but is not limited to one of the followings:
a performance mode (high-performance mode, implemented based on configured maximum frequency);
a powersave mode (power-saving mode, implemented based on configured minimum frequency);
a userspace mode (implemented based on the CPU frequency set in a user space, requires carrying a target CPU frequency configuration parameter, such as scaling_set_speed);
a schedutil mode (kernel space scheduler calculates load of each task, and a CPU frequency controller adjusts the CPU frequency based on CPU utilization);
an ondemand mode (adjusts the CPU frequency in proportion to CPU load); or
a conservative mode (adjusts the CPU frequency in steps based on the CPU load).

The power state of the CPU may include but is not limited to one of the followings:
a G-State (global system-level power state, under which other states correspond);
an S-State (CPU sleep state, the larger the quantity, the higher the sleep level);
a C-State (valid only for a G0 state, CPU core-level operational state, the larger the quantity, the higher the power saving level);
a P-State (system performance setting state, reducing CPU power consumption by adjusting CPU frequency, P0 is the highest performance, P1, P2, etc. are power-saving states); or
a T-State (power-saving state, power saving is achieved by adjusting CPU operating time).

The CPU core pinning rule may include but are not limited to one of the followings: STATIC, or DYNAMIC.

The STATIC can refer to static; the DYNAMIC can refer to dynamic.

It should be noted that the CPU frequency state or the CPU frequency mode, the CPU power state, and the CPU core pinning rule, etc. can be pre-set or configured based on the practical application scenario, and the above description does not limit thereto.

In practical application, the cloud platform can inform the network element of its own state, and the network element provides a power-saving policy and/or a computing resource adjustment policy based on the state of the cloud platform, i.e., sending the first information.

Based on this, in some embodiments, the method further includes:
receiving the measurement information from the cloud platform;
determining the first information based on the measurement information;
wherein, the measurement information includes but is not limited to at least one of the followings:
   third information, at least used to indicate a pinning related information between the network function of the cloud platform and a CPU core;
   a number of virtual CPUs;
   CPU frequency;
   CPU utilization;
   CPU temperature; or
   a CPU power state.

The cloud platform measures its own state to obtain measurement information; reports the measurement information to the network element, and the network element determines the first information based on the measurement information.

It should be noted that the CPU utilization may refer to the utilization of the CPU core and/or the utilization of the physical CPU; the CPU frequency may refer to the frequency of the CPU core and/or the frequency of the physical CPU; this is not a limitation here. The CPU temperature generally refers to the temperature of the physical CPU; the CPU power state generally refers to the power state of the physical CPU.

In some embodiments, the third information includes, but is not limited to, at least one of the followings:
whether the network function supports CPU core pinning;
at least one CPU core pinned to the network function; or
a correspondence between the virtual CPU and the CPU core.

The cloud platform can detect its own CPU frequency, CPU utilization, CPU temperature, CPU power state, a current state of a running network function (such as whether the network function supports CPU core pinning, the CPU core pinned to the network function, the correspondence between the virtual CPU and the CPU core), the number of virtual CPUs (which can specifically include the number of virtual CPUs allocated for each network function), etc., to obtain measurement information. After the measurement information is notified to the network element, the network element can generate a power-saving policy.

In practical application, the cloud platform obtains the measurement information after the detection, and notifies the network element of its current state through the measurement information; the network element determines the first information based on the measurement information and sends the first information to the cloud platform; the cloud platform configures the computing resource of the network function based on the first information. For example, a certain network function is pinned to a CPU core, and the CPU frequency state or CPU frequency mode is adjusted to a performance mode.

In addition, the priority of a resource adjustment policy parameter involved in the power-saving policy can be set. For example, when generating a power-saving policy, the CPU frequency or the number of CPU cores to be used may be adjusted first, and finally the power state of the CPU is modified.

In some embodiments, the measurement information and/or configuration information may also include cluster-related identification information. The cluster-related configuration information includes but is not limited to at least one of the followings:
cloud identification (cloudId), that is, the identifier of the cloud platform, used to identify the cloud platform where the current network function is located;
first identification, used to identify a master node of the cloud platform cluster where the current network function is located;
second identification, used to identify a working node of the cloud platform cluster where the current network function is located; or
third identification, used to identify an instance of the current network function.

In some embodiments, the determining the first information based on the measurement information includes:
determining the first information based on a preset first rule and the measurement information;
using a preset first model to identify the measurement information and determine the first information.

The preset first rule and the preset first model can be formulated based on any requirement, and there is no limitation on a formulation method and formulation content of the first rule and/or the first model.

In some embodiments, the first rule includes but is not limited to at least one of the followings:
a first trigger condition corresponding to each parameter value in the measurement information and a first operation corresponding to the first trigger condition; or
a second trigger condition corresponding to each parameter value combination included in the measurement information and a second operation corresponding to the second trigger condition.

In some embodiments, the first trigger condition includes: the parameter value belongs to a first threshold range;
the second trigger condition includes: each parameter value in the parameter value combination belongs to a second threshold range corresponding to the parameter value.

In some embodiments, each of the first operation and the second operation includes but is not limited to at least one of the followings:
adjusting a CPU frequency state or a CPU frequency mode;
adjusting a CPU power state;
adjusting a CPU core pinned to the network function;
adjusting a CPU core pinning rule; or
adjusting a correspondence between the virtual CPU and the CPU core.

Specifically, the parameter value included in the measurement information may be a real-time measurement value or a statistical value of any parameter in the measurement information;
the parameter value combination may include the real-time measurement value or the statistical value of multiple parameters in the measurement information.

For example, the parameter value may include at least one of the following parameter values: CPU frequency, CPU utilization, or CPU temperature.

A respective different first trigger condition may be set for each parameter, and a respective different second trigger condition may also be set for each parameter combination. Specifically, a respective different threshold range may be set corresponding to each parameter.

For example, for the CPU frequency, setting the corresponding threshold range may include, one or a set of CPU frequency threshold ranges, such as [0, f1), [f1, f2), ... [fn-1, fn];
for the CPU utilization, setting the corresponding threshold range may include: one or a set of CPU utilization threshold ranges, such as [0, t1), [t1, t2), ... [tn-1, tn];
for the CPU temperature, setting the corresponding threshold range may include: one or a set of CPU temperature threshold ranges, such as [0, p1), [p1, p2), ... [pn-1, pn].

In application, the CPU core, the virtual CPU and other information currently pinned to each network function are determined based on the measurement information measured and sent by the cloud platform. Combined with the resource occupancy of the CPU pinned to the network function (e.g., the threshold range to which the CPU frequency belongs, the threshold range to which the CPU utilization belongs, and the threshold range to which the CPU temperature belongs), it is determined whether and/or how to adjust operations, i.e., determining the first operation or the second operation.

For example, a network function of a cloud platform is allocated with a CPU core 1 and a CPU core 2; based on measurement information, it is determined that CPU utilization of the CPU core 1 belongs to a threshold range [t1, t2), and the CPU utilization of the CPU core 2 belongs to a threshold range [0, t1) (t2 is greater than t1, t1 is the minimum utilization threshold), then an operation can be determined to adjust the CPU core pinned to the network function, for example: unpinning the pinning related information between the CPU core 2 and the network function, and releasing the CPU core 2.

For another example, a network function of a cloud platform is allocated with a CPU core 1; based on measurement information, it is determined that CPU utilization of the CPU core 1 belongs to a threshold range [t2, t3), and CPU frequency belongs to a threshold range [f1, f2); then an operation can be determined to adjust a CPU frequency state or a CPU frequency mode, for example: adjusting from a performance mode (high-performance mode) to a powersave mode (power saving mode), or adjusting to a customized mode (userspace mode).

It should be noted that the above threshold range setting, the parameter value combination, and the executed operation are only used as an example, and the trigger condition, the threshold range, the corresponding first operation, and the second operation are not limited thereto.

In the above operation, it notifies the cloud platform through first information to realize a configuration of a computing resource of the cloud platform.

In some embodiments, the method further includes:
performing training based on a training sample set and a neural network model to obtain a trained neural network model as a first model;
the training sample set includes multiple training samples, each training sample includes sample measurement information and a label; the label can be the sample first information. The sample measurement information can be set with reference to the above measurement information, and the sample first information can be set with reference to the above first information, which will not be elaborated here.

In some embodiments, receiving measurement information from a cloud platform includes at least one of the followings:
receiving the measurement information sent by the cloud platform at a preset time period; or
receiving the measurement information sent by the cloud platform when a preset condition is met.

When the cloud platform sends the measurement information at the preset time period, the measurement information includes at least one of the followings:
an average value of a measurement value of at least one parameter within the preset time period;
a maximum value of a measurement value of at least one parameter within the preset time period; or
a minimum value of a measurement value of at least one parameter within the preset time period.

The at least one parameter may include: CPU frequency, CPU utilization, CPU temperature, or a CPU power state, etc.

The preset condition is met, including:
the measurement value and/or a statistical value of at least one parameter in the measurement information exceeds a preset threshold.

The statistical value can be a maximum value, a minimum value, an average value, a total value, etc. within a time period, and can be specifically set based on an actual need.

In some embodiments, first information includes at least one of the followings:
a performance mode;
a balanced mode;
a power management mode or a powersave mode.

In some embodiments, when the first information includes the performance mode, the first information is used to indicate that computing resource of a network function of the cloud platform is increased or remains unchanged to support a high-performance operation; or,
when the first information includes the balanced mode, the first information is used to indicate that the computing resource of the network function of the cloud platform is increased or decreased within a preset range to support an adaptive adjustment; or,
when the first information includes the power management mode or the powersave mode, the first information is used to indicate that the computing resource of the network function of the cloud platform is decreased to support power saving.

In some embodiments, a computing resource adjustment parameter used for adjusting computing resource of a network function of the cloud platform includes at least one of the followings:
a number of virtual CPUs;
a CPU frequency state or a CPU frequency mode or a CPU performance state;
a CPU power state or a CPU power state or a CPU idle state; or
a CPU temperature state.

The adjustment for computing resource of a network function of the cloud platform may include at least one of the followings: the computing resource of the network function of the cloud platform is increased or remains unchanged to achieve the high-performance operation; the computing resource of the network function of the cloud platform is increased or decreased within the preset range to achieve the adaptive adjustment; or the computing resource of the network function of the cloud platform is decreased to achieve the power saving.

Accordingly, the embodiment of the present disclosure further provides a communication method on a cloud platform side.

Fig. 3 is another flow chart of a communication method provided by an embodiment of the present disclosure; as shown in Fig. 3, the method can be applied to the cloud platform, and the method includes:
step 301: receiving first information from a network element; the first information is used to indicate computing resource configuration of a network function of the cloud platform, and the first information is determined based on at least measurement information of the cloud platform.

The network element includes at least one of the followings: an SMO, an NFVO, an MEO, a VNFM, or a CNFM.

The cloud platform can be an O-Cloud, a VIM, a CIM or other cloud platform.

In some embodiments, the first information includes but is not limited to at least one of the followings:
second information, at least used to indicate a pinning related information between the network function of the cloud platform and a CPU core;
a number of virtual CPUs;
a CPU frequency state or a CPU frequency mode; or
a CPU power state.

In some embodiments, the second information includes but is not limited to at least one of the followings:
whether the network function supports CPU core pinning;
at least one CPU core pinned to the network function;
a CPU core pinning rule; or
a correspondence between the virtual CPU and the CPU core.

In some embodiments, the method further includes:
sending the measurement information to the network element;
wherein the measurement information includes at least one of the followings:
   third information, at least used to indicate a pinning related information between a virtual resource of the cloud platform and a CPU core;
   a number of virtual CPUs;
   CPU frequency;
   CPU utilization;
   CPU temperature; or
   a CPU power state.

In some embodiments, the third information includes but is not limited to at least one of the followings:
whether the network function supports CPU core pinning;
at least one CPU core pinned to the network function; or
a correspondence between the virtual CPU and the CPU core.

In some embodiments, the network function includes but is not limited to at least one of the followings:
VNF;
CNF;
Near-RT RIC;
CU;
CU-CP;
CU-UP;
DU; or
RU.

The above first information, measurement information, network function, etc. have been described in the method shown in Fig. 2, and will not be elaborated here.

In practical application, after receiving the first information, the cloud platform configures the computing resource of the network function based on an indication of the first information.

Based on this, in some embodiments, the method further includes:
configuring the computing resource of the network function of the cloud platform based on the first information; it may include but is not limited to at least one of the followings:
adjusting a CPU frequency state or a CPU frequency mode;
adjusting a CPU power state;
adjusting a CPU core pinned to the network function;
adjusting a CPU core pinning rule; or
adjusting a correspondence between the virtual CPU and the CPU core.

The above adjustments can be specifically performed based on the content included in the first information.

The cloud platform can determine and indicate at least one of the above operations based on the first information.

In some embodiments, sending measurement information to a network element includes at least one of the followings:
sending the measurement information to the network element at a preset time period; or
sending the measurement information to the network element when a preset condition is met.

In some embodiments, the measurement information includes at least one of the followings:
an average value of a measurement value of at least one parameter within the preset time period;
a maximum value of a measurement value of at least one parameter within the preset time period; or
a minimum value of a measurement value of at least one parameter within the preset time period.

In some embodiments, the preset condition is met, including:
the measurement value and/or a statistical value of at least one parameter in the measurement information exceeds a preset threshold.

Through the method shown in Fig. 2 and Fig. 3, the network element implements the adjustment of the network function level for one or more CPU cores (such as the CPU frequency state or the CPU frequency mode, the CPU power state, the correspondence between the virtual CPU and the CPU core, etc.) based on the measurement information of the cloud platform. Compared with the method of adjusting the CPU frequency of all CPU cores through BIOS for a physical server, it has a more fine-grained and customized effect, reduces unnecessary CPU power consumption, and thus achieves the purpose of power saving on the cloud platform.

The embodiment of the present disclosure further provides an O-RAN architecture, which includes: a cloud platform and a network element; the cloud platform may be O-Cloud, and the network element may be an SMO. In response to low resource utilization of the O-Cloud, the SMO may generate and send a power-saving policy to O-Cloud DMS in combination with network function load, so that the O-Cloud DMS dynamically adjusts the configuration of a CPU pinned to the network function, reduces the power consumption of the O-Cloud, and achieves the purpose of power saving.

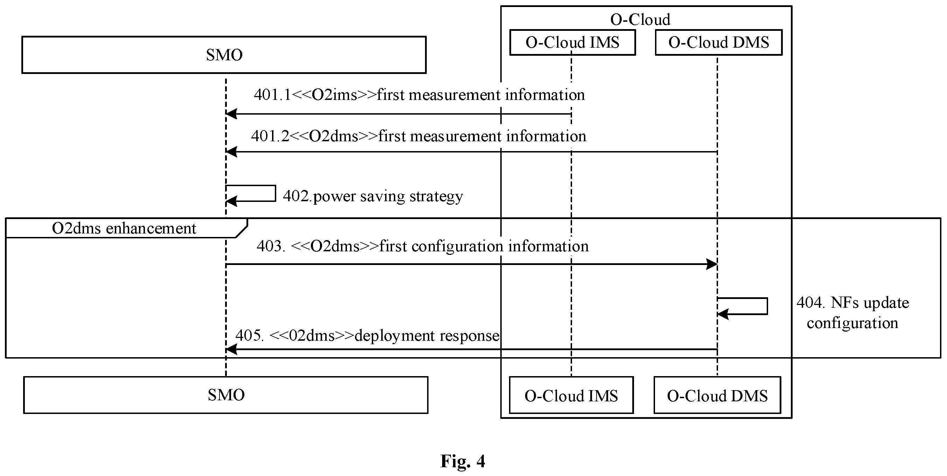

Fig. 4 is a flow chart of a power-saving method provided by an application embodiment of the present disclosure; as shown in Fig. 4, the method includes the following steps.

step 401: an O-Cloud IMS reports current first measurement information to an SMO through an O2ims interface (401.1), and an O-Cloud DMS reports current first measurement information through an O2dms interface (401.2).

The first measurement information includes at least one of the followings:
third information, used to indicate a pinning related information between a VNF and/or a CNF and a currently pinned CPU core;
a number of virtual CPUs;
resource occupancy of the CPU core pinned to the VNF and/or the CNF (including CPU frequency, CPU load, CPU utilization, CPU temperature, a CPU power state, etc.).

The third information may include at least one of the followings: whether the VNF and/or the CNF supports CPU core pinning; at least one CPU core pinned to the VNF and/or the CNF; the correspondence between the virtual CPU and the CPU core.

The network function is the VNF and/or the CNF as an example for explanation. In practical application, the network function may also include Near-RT RIC, O-CU, O-CU-CP, O-CU-UP, O-DU, O-RU, etc.

A reporting method includes: periodic reporting and/or event-triggered reporting.

Step 402: the SMO generates the power-saving policy (at least including the power-saving policy of the O-Cloud) based on the first measurement information reported by the O-Cloud IMS and the O-Cloud DMS.

The SMO can also generate the power-saving policy in combination with the measurement information reported by the VNF and/or the CNF through an O1 interface (which may include network service load, such as a number of users, a number of PRBs, PRB utilization, etc.).

Step 403: based on the power-saving policy, the SMO sends the first configuration information to the O-Cloud DMS through the O2dms interface.

The first configuration information is used to instruct the O-Cloud to perform power-saving configuration, including but not limited to at least one of the followings: a CPU frequency mode or a CPU frequency state, second information, a number of virtual CPUs, a CPU power state and other parameters.

The second information includes at least one of the followings: whether the VNF and/or the CNF supports the CPU core pinning; at least one CPU core pinned to the VNF and/or the CNF; a CPU core pinning rule; or correspondence between the virtual CPU and the CPU core.

Step 404: the O-Cloud DMS updates a deployment of the VNF and/or the CNF based on the first configuration information sent by the SMO.

Specifically, a deployment management request can be sent, and the deployment management request carries the first configuration information.

Step 405: the O-Cloud DMS sends a success or failure response to the SMO after the update.

According to the above processes in step 401 and step 403, the first measurement information reported through the O2ims interface and/or the O2dms interface and the first configuration information sent through the O2dms interface may include cluster-related identification information, as shown in Table 1.

**Table 1**

| Parameter | Necessity | Description |
|---|---|---|
| cloudId | M (Mandatory) | Identifier of an O-Cloud, identifying the O-Cloud where the current VNF and/or the CNF is located |
| First identifier (e.g., masterNodeId) | M | Identifying a master node of the cluster where the current VNF and/or the CNF is located |
| Second identifier (e.g., workerNodeId) | M | Identifying a worker node of the cluster where the current VNF and/or the CNF is located |
| Third identifier (e.g., instanceId) | M | Identifying an instance of the current VNF and/or the CNF |

The masterNodeId refers to a master node identifier; the workerNodeId refers to a worker node identifier; the instanceId refers to an instance identifier.

According to the above process in step 401, the O-Cloud IMS reports the first measurement information to the SMO through the O2ims interface and the O-Cloud DMS reports the first measurement information through the O2dms interface to notify the resource occupancy of the current VNF and/or the CNF. The reported first measurement information includes but is not limited to the parameters shown in Table 2.

**Table 2**

| Parameter | Necessity | Description |
|---|---|---|
| cpuFrequency | M | Real-time operating frequency of the CPU |
| virtualCpuPinningSupported | M | Whether the current VNF and/or the CNF supports core pinning |
| > cpuMap | O (Optional) | A pinning related information between the virtual CPUs currently allocated to the VNF and/or the CNF and the CPU core |
| numVirtualCpu | M | A number of virtual CPUs (such as a number of virtual CPUs currently occupied by the VNF and/or CNF) |
| cpuUtilization | M | CPU utilization (the utilization of the CPU currently occupied by the VNF and/or the CNF, reflecting load of the CPU occupied by the VNF and/or the CNF) |
| cpuTemperature | O | CPU temperature (the temperature of the CPU currently occupied by the VNF and/or the CNF) |
| cpuState | O | Power state (the power state of the CPU currently occupied by the VNF and/or the CNF) |

According to step 403, the configuration parameters in the first configuration information sent by the SMO to the O-Cloud DMS through the O2dms interface include but are not limited to those shown in Table 3.

**Table 3**

| Parameter | Necessity | Description |
|---|---|---|
| cpuFreqMod | M | CPU frequency mode or CPU frequency states |
| virtualCpuPinning | M | Whether to support CPU core pinning |
| > cpuPinningPolicy | O | Indicates a CPU core pinning policy |
| > cpuPinningRules | O | A "STATIC" core pinning rule |
| > cpuMap | O | A pinning related information between the virtual CPU and the CPU core allocated to the current VNF and/or the CNF |
| numVirtualCpu | M | A number of virtual CPUs allocated for the VNF and/or the CNF |
| cpuState | O | A power state of the CPU (Adjusting the power state in a BIOS requires restarting the operating system) |

The BIOS refers to the Basic Input Output System.

The CPU frequency mode or the CPU frequency state is adjusted during the operation of the operating system, and may include but is not limited to one of the followings: a performance mode (high-performance mode, implemented based on configured maximum frequency); a powersave mode (power-saving mode, implemented based on configured minimum frequency); a userspace mode (implemented based on the CPU frequency set in a user space, requires carrying a target CPU frequency configuration parameter, such as scaling_set_speed); a schedutil mode (kernel space scheduler calculates load of each task, and a CPU frequency controller adjusts the CPU frequency based on CPU utilization); an ondemand mode (adjusts the CPU frequency in proportion to CPU load); or a conservative mode (adjusts the CPU frequency in steps based on the CPU load).

The power state of the CPU may include but is not limited to one of the followings: a G-State (global system-level power state, under which other states correspond); an S-State (CPU sleep state, the larger the quantity, the higher the sleep level); a C-State (valid only for a G0 state, CPU core-level operational state, the larger the quantity, the higher the power saving level); a P-State (system performance setting state, reducing CPU power consumption by adjusting CPU frequency, P0 is the highest performance, P1, P2, etc. are power-saving states); or a T-State (power-saving state, power saving is achieved by adjusting CPU operating time).

The CPU core pinning rule may include: STATIC, DYNAMIC, etc.

In the cloud platform power saving method proposed in the embodiments of the present disclosure, with respect to the O-Cloud power saving solution, it enhances the O2dms interface to send a configuration parameter (such as CPU frequency) to the O-Cloud DMS, so that the O-Cloud DMS can execute the power saving policy, thereby solving the problem that the configuration file sent by the SMO to the O-Cloud DMS through the O2dms interface only specifies the number of vCPUs and cannot save power for an O-Cloud resource. Through the above method, the power saving policy (i.e., the first information) is configured based on resource occupancy of the O-Cloud (i.e., the measurement information) and sent it to the O-Cloud, so as to realize the dynamic adjustment of the O-Cloud resource, which is helpful to reduce the overall power consumption of the O-Cloud.

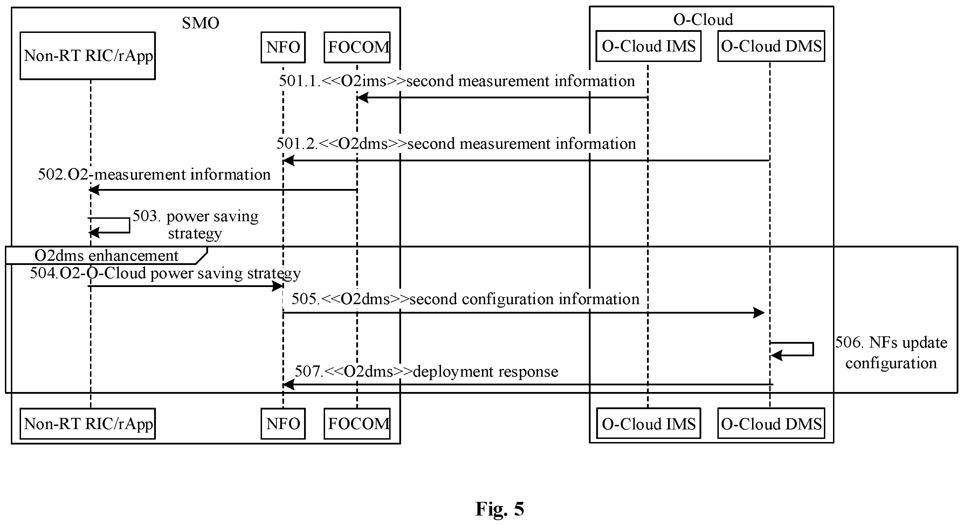

Fig. 5 is a flow chart of a method for generating a power-saving policy provided by an application embodiment of the present disclosure; as shown in Fig. 5, the power-saving policy can be generated by a Non-RT RIC/rApp in an SMO, and the method includes the following steps.

Step 501: an O-Cloud IMS reports second measurement information to Federated O-Cloud Orchestration & Management (FOCOM) in the SMO through an O2ims interface, and an O-Cloud DMS reports second measurement information to Network Function Orchestration (NFO) in the SMO through an O2dms interface.

The second measurement information is the same as the first measurement information in the method shown in Fig. 4. For details on the second measurement information, please refer to Table 2, which will not be elaborated here.

The reporting may be implemented through periodic reporting and/or event-triggered reporting.

Step 502: the FOCOM reports the measurement information of the O-Cloud IMS to a Non-RT RIC/rApp, and the NFO reports the measurement information of the O-Cloud DMS to the Non-RT RIC/rApp.

Step 503: the Non-RT RIC/rApp generates the power-saving policy based on the second measurement information reported by the O-Cloud IMS and/or the O-Cloud DMS, which at least needs to include the power-saving policy of the O-Cloud.

The Non-RT RIC/rApp can also combine the measurement information reported by a VNF and/or the measurement information reported by a CNF through the O1 interface, such as network service load, including a number of users, a number of PRBs, PRB utilization, etc.

Step 504: the Non-RT RIC rApp sends the power-saving policy of the O-Cloud to the NFO.

Step 505: based on the received power-saving policy, the NFO sends second configuration information to the O-Cloud DMS through the O2dms interface for the O-Cloud to perform power-saving configuration.

Specifically, a deployment management request can be sent, and the deployment management request carries the second configuration information. The second configuration information may include but is not limited to at least one of the followings: a CPU frequency mode or a CPU frequency state, second information, a number of virtual CPUs, or a CPU power state and other parameters.

The second configuration information is the same as the first configuration information in the method shown in Fig. 4. For details, please refer to Table 3, which will not be elaborated here.

Step 506: the O-Cloud DMS updates a deployment of the VNF and/or the CNF based on the power-saving policy configured by the NFO.

Step 507: the O-Cloud DMS sends a success or failure response to the NFO after the update.

As shown in Fig. 5, a method for generating the power-saving policy of the O-Cloud implemented by the Non-RT RIC/rApp is provided. The Non-RT RIC/rApp in the SMO receives measurement information reported by the O-Cloud IMS through the FOCOM, generates the power-saving policy of the O-Cloud, generates second configuration information based on the power-saving policy through the NFO, and sends the second configuration information to the O-Cloud DMS.

In some embodiments, the SMO may pre-configure the power-saving policy related to the VNF and/or the CNF of the O-Cloud, as well as a trigger condition and a threshold required for CPU configuration update. After receiving the measurement information reported by the O-Cloud IMS or the O-Cloud DMS, the SMO determines CPU configuration information based on the power-saving policy and sends the configuration information to the O-Cloud DMS through the NFO.

The power-saving method for the cloud platform provided by the embodiments of the present disclosure enhances the O2dms interface to send a configuration parameter (such as CPU frequency) to the O-Cloud DMS, so that the O-Cloud DMS can implement the power saving policy. Specifically, based on the pinning state of the VNF and/or the CNF with the CPU core and CPU resource occupancy (such as CPU utilization, CPU load, etc.) reported by the O-Cloud IMS and/or the O-Cloud DMS, the SMO calculates the current O-Cloud power consumption, generates the power-saving policy and sends it to O-Cloud DMS through the O2dms interface. This includes the CPU resource adjustment parameter, such as CPU frequency, CPU state, etc., and the corresponding O-Cloud DMS dynamically adjusts the O-Cloud CPU and other resources, which is helpful to reduce the overall power consumption of the O-Cloud.

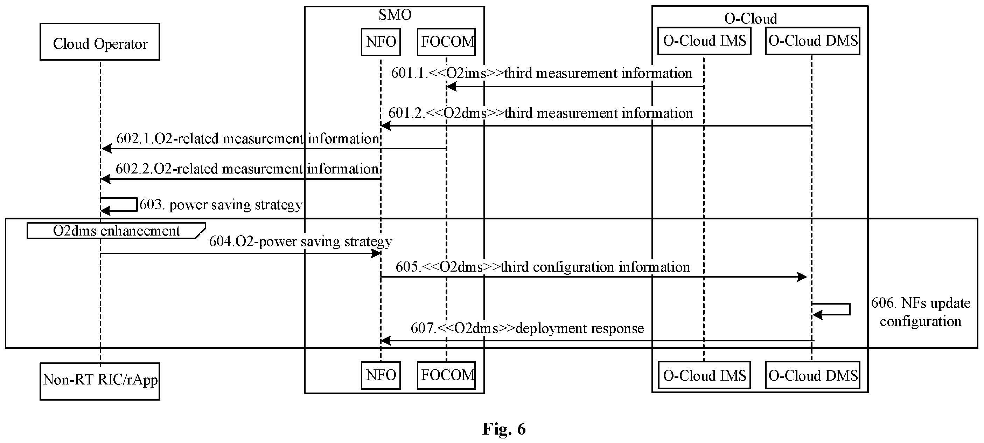

Fig. 6 is another flow chart of a method for generating a power-saving policy provided by an application embodiment of the present disclosure; as shown in Fig. 6 , a method for generating a power-saving policy of an O-Cloud based on a cloud operator is provided, wherein the cloud operator receives measurement information reported by an O-Cloud IMS sent through FOCOM of the SMO, and/or receives measurement information reported by the O-Cloud DMS sent through the NFO, generates the power-saving policy of the O-Cloud, generates third configuration information based on the power-saving policy through the NFO, and sends the third configuration information to the O-Cloud DMS. The method includes the following steps.

Step 601: the O-Cloud IMS reports current third measurement information to the FOCOM in the SMO through an O2ims interface, and the O-Cloud DMS reports current third measurement information to the NFO in the SMO through an O2dms interface.

The third measurement information includes but is not limited to at least one of the followings:
third information, used to indicate a pinning related information between a VNF and/or a CNF and a currently pinned CPU core;
a number of virtual CPUs;
resource occupancy of the CPU core pinned to the VNF and/or the CNF (including CPU frequency, CPU load, CPU utilization, etc.).

The network function being the VNF and/or the CNF is just an example for explanation. In practical application, the network function may also include Near-RT RIC, O-CU, O-CU-CP, O-CU-UP, O-DU, O-RU, etc.

The third measurement information is the same as first measurement information and second measurement information mentioned above. For details, please refer to Table 2, which will not be elaborated here. The reporting may be implemented through periodic reporting and/or event-triggered reporting.

Step 602: the FOCOM reports the measurement information of the O-Cloud IMS to the cloud operator, and the NFO reports the measurement information of the O-Cloud DMS to the cloud operator.

Step 603: the cloud operator generates the power-saving policy based on the third measurement information reported by the O-Cloud IMS and/or the O-Cloud DMS, which at least needs to include the power-saving policy of the O-Cloud.

The cloud operator can also combine the measurement information reported by the VNF and/or the measurement information reported by the CNF through the O1 interface, such as network service load, including a number of users, a number of PRBs, PRB utilization, etc.

Step 604: the cloud operator sends the power-saving policy of the O-Cloud to the NFO.

Step 605: based on the received power-saving policy, the NFO sends third configuration information to the O-Cloud DMS through the O2dms interface, such that the O-Cloud may perform power-saving configuration.

The third configuration information includes but is not limited to at least one of the followings: a CPU frequency mode or a CPU frequency state, second information, a number of virtual CPUs, a CPU power state and other parameters.

The third configuration information is the same as first configuration information and second configuration information mentioned above. For details, please refer to Table 3, which will not be elaborated here.

Step 606: the O-Cloud DMS updates a deployment of the VNF and/or the CNF based on the configuration information sent by the NFO.

Step 607: the O-Cloud DMS sends a success or failure response to the NFO after the update.

Regarding the method for generating a power-saving policy, the following examples are specifically provided.

In an application embodiment, SMO generates a power-saving policy, and the power-saving policy includes a relevant configuration parameter of CPU frequency. Specifically, after receiving data reported based on O-Cloud IMS and/or O-Cloud DMS, the SMO determines whether to reduce the frequency of the CPU core pinned to a VNF/CNF based on a pinning state of the VNF and/or the CNF (i.e., network function) and a CPU core, for example, the CPU core pinned to first VNF/CNF (assuming it is a CPU core x, a CPU core y, and a CPU core z), and CPU utilization. Frequency reduction is triggered, for instance, by setting one or a set of threshold values.

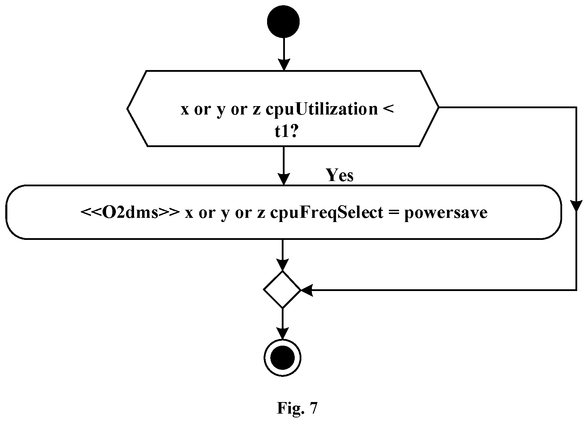

One implementation method is to determine that the CPU utilization of the CPU core x, the CPU core y, and the CPU core z pinned to the first VNF/CNF is less than t1 by setting a threshold value t1, and perform CPU frequency reduction on the CPU core x, the CPU core y, and the CPU core z, and update frequency configuration (cupFreqSelect) to a powersave mode, as shown in Fig. 7.

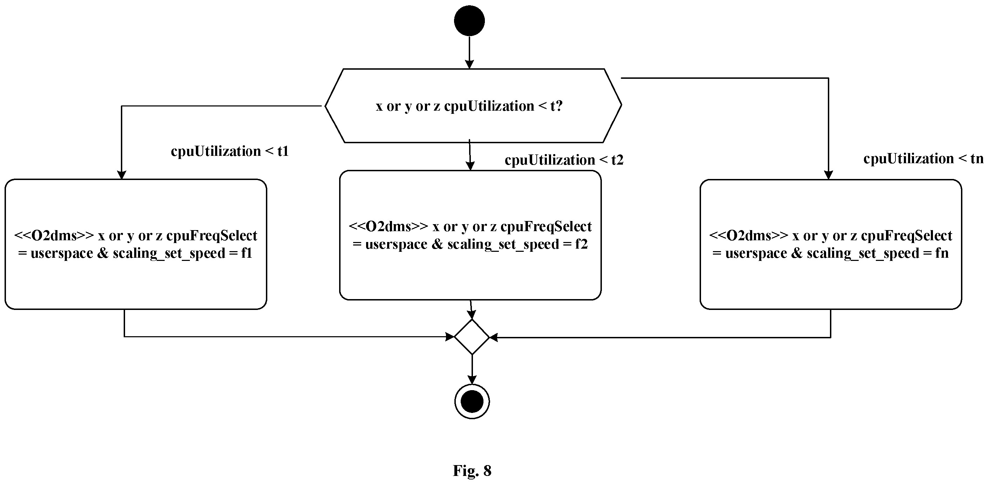

Another implementation method is to set a set of threshold values, such as t1, t2,..., tn (t1<t2<...<tn) to determine that the utilizations of the CPU core x, the CPU core y, and the CPU core z pinned to the first VNF/CNF are lower than the corresponding threshold values (assuming t1, t2, t3) respectively, perform the CPU frequency reduction on the CPU core x, the CPU core y, and the CPU core z, update the frequency configuration to a userspace mode, and set different target CPU frequency configuration parameters based on different thresholds, such as f1, f2,..., fn (f1<f2<...<fn); as shown in Fig. 8.

In another embodiment, the SMO generates a power-saving policy, and the power-saving policy includes a relevant configuration parameter of a CPU core. Specifically, after receiving the data reported by O-Cloud IMS and/or O-Cloud DMS, the SMO determines whether to modify the CPU core pinned to second VNF/CNF based on a pinning state of the VNF/CNF and the CPU core, for example, the CPU core pinned to the second VNF/CNF (assuming it is CPU core x, CPU core y, and CPU core z), and CPU utilization. Release of the CPU core is triggered, for example, by setting a threshold of the CPU utilization.

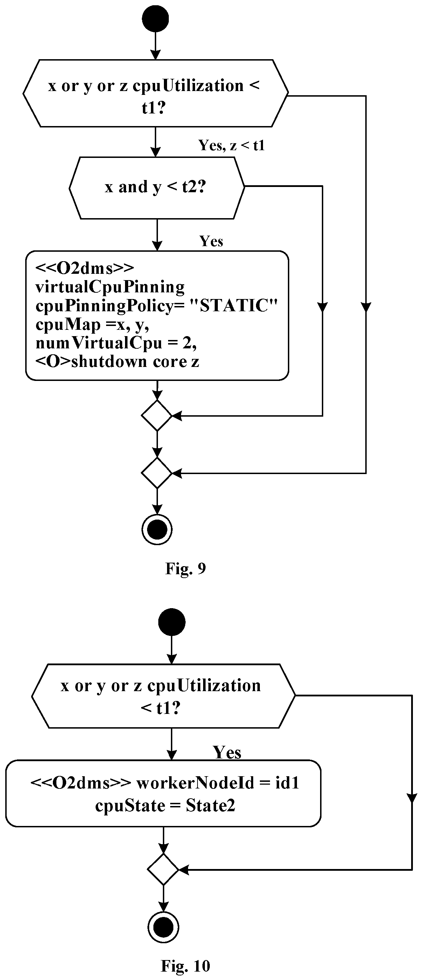

One implementation method is to determine utilization of a CPU core x, a CPU core y, and a CPU core z pinned to second VNF/CNF by setting thresholds t1 and t2. For example, when the utilization of the CPU core z is lower than t1, and the utilization of the CPU core x and the CPU core y is not greater than t2, the configuration information is sent to the O-Cloud DMS through the O2dms to modify the CPU core pinning related information of the second VNF/CNF and update it to the CPU core x and the CPU core y, thereby releasing the CPU core z. Optionally, the CPU core z can be further shut down to achieve power saving, as shown in Fig. 9.

In another embodiment, the SMO generates a power-saving policy, which includes a configuration parameter related to a CPU power state. Specifically, after receiving data reported based on the O-Cloud IMS and/or O-Cloud DMS, the SMO determines whether to modify power supply configuration of a physical node where the CPU core pinned to third VNF/CNF is located, based on a pinning state of the VNF/CNF and the CPU core, for example, when the physical node only deploys the third VNF/CNF or it is determined that the CPU load used by other VNF/CNFs is much lower than the CPU load used by the third VNF/CNF, the CPU cores pinned to the third VNF/CNF include the CPU core x, the CPU core y, and the CPU core z, along with the CPU utilization of each CPU core. Modification of the CPU power supply configuration of the physical node where the core is located is triggered, for instance, by setting a threshold value of the CPU utilization.

An implementation method is to determine utilization of a CPU core x, a CPU core y, and a CPU core z pinned to third VNF/CNF by setting a threshold value t1. For example, when the utilization of the CPU core x is lower than t1, configuration information is sent to the O-Cloud DMS through the O2dms to modify the CPU power supply configuration of the physical node where the third VNF/CNF is located from State1 to State2. For example, the physical node is changed to C0/P1 or C1-C7 from C0/P0 in a G0 working mode, or the G0 working mode is directly changed to G1-G3, as shown in Fig. 10.

In practical application, the priority of a resource adjustment policy parameter involved in a power-saving policy can be set. For example, when generating the power-saving policy, the SMO gives the priority to adjusting the CPU frequency or adjusting the number of CPU cores used, and finally modifies the CPU power state.

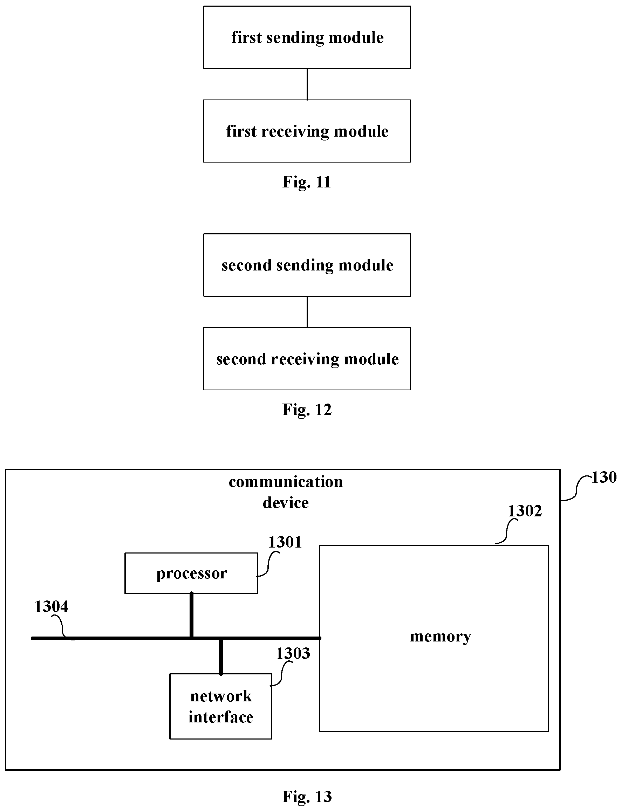

Fig. 11 is a structural diagram of a communication apparatus provided by an embodiment of the present disclosure; as shown in Fig. 11, the apparatus is applied to a network element, and the apparatus includes:

a first sending module, configured to send first information to a cloud platform; the first information is used to indicate computing resource configuration of a network function of the cloud platform, and the first information is determined based on at least measurement information of the cloud platform.

In the above solution, the first information includes at least one of the followings:
second information, at least used to indicate a pinning related information between the network function of the cloud platform and a CPU core;
a number of virtual CPUs;
a CPU frequency state or a CPU frequency mode; or
a CPU power state.

In the above solution, the second information includes at least one of the followings:
whether the network function supports CPU core pinning;
at least one CPU core pinned to the network function;
a CPU core pinning rule; or
a correspondence between the virtual CPU and the CPU core.

In the above solution, the apparatus further includes:
a first receiving module, configured to receive the measurement information from the cloud platform;
a first determination module, configured to determine the first information based on the measurement information;
the measurement information includes at least one of the followings:
   third information, at least used to indicate a pinning related information between the network function of the cloud platform and a CPU core;
   a number of virtual CPUs;
   CPU frequency;
   CPU utilization;
   CPU temperature; or
   a CPU power state.

In the above solution, the third information includes at least one of the followings:
whether the network function supports CPU core pinning;
at least one CPU core pinned to the network function; or
a correspondence between the virtual CPU and the CPU core.

In the above solution, the network function includes at least one of the followings:
VNF;
CNF;
Near-RT RIC;
CU;
CU CP;
CU UP;
DU; or
RU.

In the above solution, the first determination module is configured to perform at least one of the followings:
using a preset first model to identify the measurement information and determine the first information; or
determining the first information based on a preset first rule and the measurement information;
the first rule includes at least one of the followings:
   a first trigger condition corresponding to each parameter value in the measurement information and a first operation corresponding to the first trigger condition; or
   a second trigger condition corresponding to each parameter value combination included in the measurement information and a second operation corresponding to the second trigger condition.

In the above solution, the first trigger condition includes: the parameter value belongs to a first threshold range;
the second trigger condition includes: each parameter value in the parameter value combination belongs to a second threshold range corresponding to the parameter value.

In the above solution, each of the first operation and the second operation includes at least one of the followings:
adjusting a CPU frequency state or a CPU frequency mode;
adjusting a CPU power state;
adjusting a CPU core pinned to the network function;
adjusting a CPU core pinning rule; or
adjusting a correspondence between the virtual CPU and the CPU core.

In the above solution, the network element includes at least one of the followings: an SMO, an NFVO, an MEO, a VNFM, or a CNFM.

It should be noted that, when the communication apparatus provided in the above embodiment implements the corresponding communication method, it only uses the division of the above program modules as an example. In practical application, the above processing can be assigned to different program modules as needed, i.e., an internal structure of the network element is divided into different program modules to complete all or part of the processing described above. In addition, the apparatus provided in the embodiment and the embodiment of the corresponding method belong to a same concept, and the specific implementation process is detailed in the method embodiment, which will not be repeated here.

Fig. 12 is another structural diagram of a communication apparatus provided by an embodiment of the present disclosure; as shown in Fig. 12, the apparatus is applied to a cloud platform, and the apparatus includes:
a second receiving module, configured to receive first information from a network element; the first information is used to indicate computing resource configuration of a network function of the cloud platform, and the first information is determined based on at least measurement information of the cloud platform.

In the above solution, the first information includes at least one of the followings:
second information, at least used to indicate a pinning related information between the network function of the cloud platform and a CPU core;
a number of virtual CPUs;
a CPU frequency state or a CPU frequency mode; or
a CPU power state.

In the above solution, the second information includes at least one of the followings:
whether the network function supports CPU core pinning;
at least one CPU core pinned to the network function;
a CPU core pinning rule; or
a correspondence between the virtual CPU and the CPU core.

In the above solution, the apparatus further includes: a second sending module, configured to send measurement information to the network element;
the measurement information includes at least one of the followings:
third information, at least used to indicate a pinning related information between a virtual resource of the cloud platform and a CPU core;
a number of virtual CPUs;
CPU frequency;
CPU utilization;
CPU temperature; or
a CPU power state.

In the above solution, the third information includes at least one of the followings:
whether the network function supports CPU core pinning;
at least one CPU core pinned to the network function; or
a correspondence between the virtual CPU and the CPU core.

In the above solution, the network function includes at least one of the followings:
VNF;
CNF;
Near-RT RIC;
CU;
CUCP;
CU UP;
DU;
RU.

In the above solution, the apparatus further includes: a configuration module configured for configuring the computing resource of the network function of the cloud platform based on the first information.

In the above solution, the configuration module is configured to perform at least one of the followings:
adjusting a CPU frequency state or a CPU frequency mode;
adjusting a CPU power state;
adjusting a CPU core pinned to the network function;
adjusting a CPU core pinning rule; or
adjusting a correspondence between the virtual CPU and the CPU core.

In the above solution, the network element includes at least one of the followings: an SMO, an NFVO, an MEO, a VNFM, or a CNFM.

It should be noted that: when the communication apparatus provided in the above embodiment implements the corresponding communication method, it only uses the division of the above program modules as an example. In practical application, the above processing can be assigned to different program modules as needed, i.e., an internal structure of the cloud platform is divided into different program modules to complete all or part of the processing described above. In addition, the apparatus provided in the embodiments and the embodiments of the corresponding methods belong to a same concept, and the specific implementation process is detailed in the method embodiment, which will not be repeated here.

Fig. 13 is a structural diagram of a communication device provided by an embodiment of the present disclosure. As shown in Fig. 13, the communication device 130 includes: a processor 1301 and a memory 1302 for storing a computer program used to be executed by the processor;

When the communication device is a network element, the processor 1301 is configured to execute the computer program to implement the followings: sending first information to a cloud platform; the first information is used to indicate computing resource configuration of a network function of the cloud platform, and the first information is determined based on at least measurement information of the cloud platform. Specifically, the communication device can also execute the method shown in Fig. 2, which belongs to a same concept as the communication method embodiment shown in Fig. 2. The specific implementation process is detailed in the method embodiment, which is not repeated here.

When the communication device is a cloud platform, the processor 1301 is configured to execute the computer program to implement: receiving first information from a network element; the first information is used to indicate computing resource configuration of a network function of the cloud platform, and the first information is determined based on at least measurement information of the cloud platform. Specifically, the communication device can also implement the method shown in Fig. 3, which belongs to a same concept as the communication method embodiment shown in Fig. 3. The specific implementation process is detailed in the method embodiment, which is not repeated here.

In practical application, a communication device 130 may also include: at least one network interface 1303. The various components in the communication device 130 are coupled together through a bus system 1304. It can be understood that the bus system 1304 is used to realize the connection and communication between these components. In addition to the data bus, the bus system 1304 also includes a power bus, a control bus and a state signal bus. However, for the sake of clarity, various buses are marked as the bus system 1304 in Fig. 13. The number of a processors 1301 can be at least one. The network interface 1303 is used for wired or wireless communication between the communication device 130 and other devices.

The memory 1302 in the embodiments of the present disclosure is used to store various types of data to support operation of the communication device 130.

The method disclosed in the above embodiments of the present disclosure can be applied to the processor 1301, or implemented by the processor 1301. The processor 1301 may be an integrated circuit chip with a signal processing capability. In the implementation process, each step of the above method can be completed by an integrated logic circuit of hardware in the processor 1301 or an instruction in software form. The processor 1301 mentioned above can be a general-purpose processor, a Digital Signal Processor (DSP), or other programmable logic devices, discrete gate or transistor logic devices, discrete hardware components, etc. The processor 1301 can implement or execute the methods, steps and logic block diagrams disclosed in the embodiments of the present disclosure. The general-purpose processor can be a microprocessor or any conventional processor, etc. The steps of the method disclosed in the embodiments of the present disclosure can be directly embodied as being executed by a hardware decoding processor, or by a combination of hardware and a software module in the decoding processor. The software module can be located in a storage medium, which is located in the memory 1302. The processor 1301 reads the information in the memory 1302 and implements the steps of the aforementioned method in combination with the hardware.

In an exemplary embodiment, the communication device 130 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general processors, controllers, Micro Controller Units (MCUs), microprocessors, or other electronic components to perform the aforementioned method.

The embodiment of the present disclosure also provides a computer-readable storage medium on which a computer program is stored;

When the computer-readable storage medium is applied to a network element, the computer program, when executed by a processor, executes: sending first information to a cloud platform; the first information is used to indicate the computing resource configuration of the network function of the cloud platform, and the first information is determined based on at least measurement information of the cloud platform. Specifically, the computer program can also execute the method shown in Fig. 2, which belongs to a same concept as the communication method embodiment shown in Fig. 2, and the specific implementation processes are detailed in the method embodiments, which are not repeated here.

When the computer-readable storage medium is applied to a cloud platform, the computer program, when executed by a processor, executes: receiving first information from a network element; the first information is used to indicate the computing resource configuration of the network function of the cloud platform, and the first information is determined based on at least measurement information of the cloud platform. Specifically, the computer program can also execute the method shown in Fig. 3, which belongs to a same concept as the communication method embodiment shown in Fig. 3, and the specific implementation processes are detailed in the method embodiments, which is not repeated here.

In the embodiments provided in the present disclosure, it should be understood that the disclosed apparatus and method can be implemented in other ways. The device embodiments described above are only schematic. For example, the division of units is only a logical function division. In actual implementation, there may be other division methods. For instance, multiple units or components can be combined, or can be integrated into another system, or some features can be ignored or not executed. In addition, a coupling, a direct coupling, or a communication connection between the components shown or discussed can be through some interfaces, and the indirect coupling or the communication connection of the devices or units can be in electrical, mechanical or other forms.

The units described above as separate components may or may not be physically separated, and the components shown as units may or may not be physical units, that is, they may be located in one place or distributed on multiple network units; some or all of the units may be selected based on actual needs to achieve the purpose of the present embodiment.

In addition, the functional units in the embodiments of the present disclosure may be all integrated in one processing unit, or each unit may be a separate unit, or two or more units may be integrated in one unit; the above integrated units may be implemented in the form of hardware or in the form of a combination of hardware and a software functional unit.

For those of ordinary skill in the art can understand that all or part of the steps of the above method embodiment can be completed by hardware related to program instructions, and the above program can be stored in a computer-readable storage medium. When the program is executed, the steps of the above method embodiment are executed; and the above storage medium includes: a mobile storage device, a Read-Only Memory (ROM), a Random Access Memory (RAM), a disk or an optical disk and other media that can store a program code.

Alternatively, if the integrated unit of the present disclosure is implemented in the form of a software functional module and sold or used as an independent product, it may also be stored in a computer-readable storage medium. Based on such an understanding, essential parts, or parts contributing to the prior art, of the technical solution of the embodiment of the present disclosure may be implemented in a form of a software product. The computer software product is stored in a storage medium, and includes several instructions to cause a computer device (which can be a personal computer, a server, or a network device, etc.) to execute all or part of the methods described in various embodiments of the present disclosure. The aforementioned storage media include: a mobile storage device, an ROM, an RAM, a disk or an optical disk and other media that can store a program code.

It should be noted that "first", "second" and the like are adopted not to describe a specific sequence or order but to distinguish similar objects.

In addition, the technical solutions recorded in the embodiments of the present disclosure can be freely combined as long as there is no conflict.

The above is only a specific implementation of the present disclosure, but the protection scope of the present disclosure is not limited thereto. Any changes or substitutions that can be easily thought of by a person skilled in the art within the technical scope disclosed in the present disclosure should be included in the protection scope of the present disclosure. Therefore, the protection scope of the present disclosure should be subject to the protection scope of the claims.

## Claims

1. A communication method applied to a network element, the method comprising:
sending first information to a cloud platform; the first information is used to indicate computing resource configuration of a network function of the cloud platform, and the first information is determined based on at least measurement information of the cloud platform.

2. The method according to claim 1, wherein the first information comprises at least one of the followings:
second information, at least used to indicate a pinning related information between the network function of the cloud platform and a Central Processing Unit (CPU) core;
a number of virtual CPUs;
a CPU frequency state or a CPU frequency mode; or
a CPU power state.

3. The method according to claim 2, wherein the second information comprises at least one of the followings:
whether the network function supports CPU core pinning;
at least one CPU core pinned to the network function;
a CPU core pinning rule; or
a correspondence between the virtual CPU and the CPU core.

4. The method according to claim 1, further comprising:
receiving the measurement information from the cloud platform;
determining the first information based on the measurement information;
wherein the measurement information comprises at least one of the followings:
third information, at least used to indicate a pinning related information between the network function of the cloud platform and a CPU core;
a number of virtual CPUs;
CPU frequency;
CPU utilization;
CPU temperature; or
a CPU power state.

5. The method according to claim 4, wherein the third information comprises at least one of the followings:
whether the network function supports CPU core pinning;
at least one CPU core pinned to the network function; or
a correspondence between the virtual CPU and the CPU core.

6. The method according to any one of claims 1 to 5, wherein the network function comprises at least one of the followings:
a Virtualised Network Function (VNF);
a Container Network Function (CNF);
a Near-Real-Time Radio Intelligent Controller (Near-RT RIC);
an Open Radio Access Network (O-RAN) Central Unit (O-CU);
an O-RAN Central Unit Control Plane (O-CU-CP);
an O-RAN Central Unit User Plane (O-CU-UP);
an O-RAN Distributed Unit (O-DU); or
an O-RAN Radio Unit (O-RU).

7. The method according to claim 4, wherein the determining the first information based on the measurement information comprises at least one of the followings:
using a preset first model to identify the measurement information and determine the first information; or
determining the first information based on a preset first rule and the measurement information;
wherein the first rule comprises at least one of the followings:
a first trigger condition corresponding to each parameter value in the measurement information and a first operation corresponding to the first trigger condition; or
a second trigger condition corresponding to each parameter value combination comprised in the measurement information and a second operation corresponding to the second trigger condition.

8. The method according to claim 7, wherein the first trigger condition comprises: the parameter value belongs to a first threshold range;
the second trigger condition comprises: each parameter value in the parameter value combination belongs to a second threshold range corresponding to the parameter value.

9. The method according to claim 7, wherein each of the first operation and the second operation comprises at least one of the followings:
adjusting a CPU frequency state or a CPU frequency mode;
adjusting a CPU power state;
adjusting a CPU core pinned to the network function;
adjusting a CPU core pinning rule; or
adjusting a correspondence between the virtual CPU and the CPU core.

10. The method according to claim 1, wherein the network element comprises at least one of the followings: a Service Management and Orchestration (SMO), a Network Functions Virtualization Orchestrator (NFVO), a Mobile Edge Orchestrator (MEO), a Virtualised Network Function Manager (VNFM), or a Container Network Function Manager (CNFM).

11. The method according to claim 1, wherein the first information comprises at least one of the followings:
a performance mode;
a balanced mode;
a power management mode or a powersave mode.

12. The method according to claim 11, wherein when the first information comprises the performance mode, the first information is used to indicate that the computing resource of the network function of the cloud platform is increased or remain unchanged to support high-performance operation; or,
when the first information comprises the balanced mode, the first information is used to indicate that the computing resource of the network function of the cloud platform is increased or decreased within a preset range to support an adaptive adjustment; or,
when the first information comprises the power management mode or the powersave mode, the first information is used to indicate that the computing resource of the network function of the cloud platform is decreased to support power saving.

13. The method according to claim 12, wherein a computing resource adjustment parameter used for adjusting the computing resource of the network function of the cloud platform comprises at least one of the followings:
a number of virtual CPUs;
a CPU frequency state or a CPU frequency mode or a CPU performance state;
a CPU power state or a CPU power state or a CPU idle state; or
a CPU temperature state.

14. A communication method applied to a cloud platform, the method comprising:
receiving first information from a network element; the first information is used to indicate computing resource configuration of a network function of the cloud platform, and the first information is determined based on at least measurement information of the cloud platform.

15. The method according to claim 14, wherein the first information comprises at least one of the followings:
second information, at least used to indicate a pinning related information between the network function of the cloud platform and a Central Processing Unit (CPU) core;
a number of virtual CPUs;
a CPU frequency state or a CPU frequency mode; or
a CPU power state.

16. The method according to claim 15, wherein the second information comprises at least one of the followings:
whether the network function supports CPU core pinning;
at least one CPU core pinned to the network function;
a CPU core pinning rule; or
a correspondence between the virtual CPU and the CPU core.

17. The method according to claim 14, further comprising:
sending the measurement information to the network element;
wherein the measurement information comprises at least one of the followings:
third information, at least used to indicate a pinning related information between a virtual resource of the cloud platform and a CPU core;
a number of virtual CPUs;
CPU frequency;
CPU utilization;
CPU temperature; or
a CPU power state.

18. The method according to claim 17, wherein the third information comprises at least one of the followings:
whether the network function supports CPU core pinning;
at least one CPU core pinned to the network function; or
a correspondence between the virtual CPU and the CPU core.

19. The method according to any one of claims 14 to 18, wherein the network function comprises at least one of the followings:
a Virtualised Network Function (VNF);
a Container Network Function (CNF);
a Near-Real-Time Radio Intelligent Controller (Near-RT RIC);
an Open Radio Access Network (O-RAN) Central Unit (O-CU);
an O-RAN Central Unit Control Plane (O-CU-CP);
an O-RAN Central Unit User Plane (O-CU-UP);
an O-RAN Distributed Unit (O-DU); or
an O-RAN Radio Unit (O-RU).

20. The method according to claim 14, further comprising:
configuring the computing resource of the network function of the cloud platform based on the first information.

21. The method according to claim 20, wherein the configuring the computing resource of the network function of the cloud platform based on the first information comprises at least one of the followings:
adjusting a CPU frequency state or a CPU frequency mode;
adjusting a CPU power state;
adjusting a CPU core pinned to the network function;
adjusting a CPU core pinning rule; or
adjusting a correspondence between the virtual CPU and the CPU core.

22. The method according to claim 14, wherein the network element comprises at least one of the followings: a Service Management and Orchestration (SMO), a Network Functions Virtualization Orchestrator (NFVO), a Mobile Edge Orchestrator (MEO), a Virtualised Network Function Manager (VNFM), or a Container Network Function Manager (CNFM).

23. A communication apparatus, applied to a network element, comprising: a first sending module, configured to send first information to a cloud platform; the first information is used to indicate computing resource configuration of a network function of the cloud platform, and the first information is determined based on at least measurement information of the cloud platform.

24. A communication apparatus, applied to a cloud platform, comprising: a second receiving module, configured to receive first information from a network element; the first information is used to indicate computing resource configuration of a network function of the cloud platform, and the first information is determined based on at least measurement information of the cloud platform.

25. A communication device comprising a memory, a processor, and a computer program stored in the memory and used to be executed by the processor, wherein the processor is configured to execute the program to implement the steps of the method according to any one of claims 1 to 13; or, configured to execute the program to implement the steps of the method according to any one of claims 14 to 22.

26. A computer-readable storage medium storing a computer program, wherein the computer program, when executed by a processor, implements the steps of the method according to any one of claims 1 to 13; or, when executed by a processor, implements the steps of the method according to any one of claims 14 to 22.
